# EUROPÄISCHE PATENTSCHRIFT

(11) **EP 3 532 339 B1**
(45) Veröffentlichungstag und Bekanntmachung des Hinweises auf die Patenterteilung: **26.03.2025**
(21) Anmeldenummer: 17811178.7
(22) Anmeldetag: 27.10.2017
(51) Int. Cl.: B60W 50/038, B60W 20/50

(54) **VERFAHREN ZUM BETREIBEN EINER STEUERVORRICHTUNG EINES KRAFTFAHRZEUGS FÜR EINEN ADAPTIVEN ENERGIESPARMODUS SOWIE STEUERVORRICHTUNG UND KRAFTFAHRZEUG**
METHOD FOR OPERATING A CONTROL DEVICE OF A MOTOR VEHICLE FOR AN ADAPTIVE ENERGY SAVING MODE AND CONTROL DEVICE AND MOTOR VEHICLE
PROCÉDÉ DE FONCTIONNEMENT D'UN DISPOSITIF DE COMMANDE D'UN VÉHICULE À MOTEUR POUR UN MODE D'ÉCONOMIE D'ÉNERGIE ADAPTATIF AINSI QUE DISPOSITIF DE COMMANDE ET VÉHICULE

(30) Priorität: 31.10.2016 CZ 20160675
(43) Veröffentlichungstag der Anmeldung: 04.09.2019
(73) Patentinhaber: Skoda Auto a.s., 293 01 Mladá Boleslav (CZ)
(72) Erfinder: MICHAELIS, Jörn, DE-10551 Berlin (DE); LOU, Jian, DE-10707 Berlin (DE); MÜLLER, Katja, DE-10437 Berlin (DE); KOMÁREK, Milan, CZ-29421 Belá pod Bezdezem (CZ)
(86) Internationale Anmeldenummer: PCT/CZ2017/000067
(87) Internationale Veröffentlichungsnummer: WO 2018/077315

(56) Entgegenhaltungen:
- EP-A2- 0 903 712
- DE-A1- 102012 003 292
- DE-A1- 102012 023 632
- DE-A1- 102013 003 411
- DE-A1- 102013 211 871
- DE-A1- 102014 215 181
- DE-A1- 102015 001 248
- DE-A1- 102015 202 845

## Beschreibung

Die Erfindung betrifft ein Verfahren zum Betreiben einer Steuervorrichtung in einem Kraftfahrzeug, insbesondere einem elektrisch angetriebenen Kraftfahrzeug. Das Kraftfahrzeug kann einen rein-elektrischen Antrieb oder einen Hybridantrieb aufweisen. Zu der Erfindung gehören auch eine Steuervorrichtung zum Durchführen des Verfahrens in einem Kraftfahrzeug sowie ein Kraftfahrzeug mit einem elektrischen Antriebsmotor und der besagten Steuervorrichtung.

In einem batterieelektrischen Kraftfahrzeug oder einem Hybridfahrzeug kann vorgesehen sein, die für den elektrischen Antriebsmotor und die sogenannten Nebenverbraucher (das sind für den Fahrbetrieb unnötige Fahrzeugkomponenten, wie zum Beispiel eine Heizung) ab einem bestimmten Restladezustand des elektrischen Energiespeichers in ihrer Leistung zu reduzieren. Die erfolgt in der Regel unabhängig von der tatsächlich noch vorhandenen Entfernung zur nächsten Ladestation oder zum geplanten Ziel. Dies bedeutet in vielen Fällen aber eine unnötige Komforteinschränkung und zugleich eine Beunruhigung des Fahrers durch entsprechende Warnmeldungen (zum Beispiel "Batteriezustand niedrig"), da oftmals vom Fahrer ausreichend geplant wurde und der Ladestopp bzw. das Fahrziel mit der verbleibenden Energie auch ohne eine solche Leistungsreduzierung erreicht werden könnte.

Die DE 10 2013 211 871 A1 offenbart ein Verfahren und eine Vorrichtung zum Betrieb eines Fahrzeugs mit Elektroantrieb. Hierbei wird ein Fahrtziel ausgewählt und, falls eine berechnete Reichweite geringer als die berechnete Fahrdistanz ist, wird ein Verändern eines Betriebszustands durch eine verringerte Leistungsaufnahme ausgegeben oder es wird ein zweites Fahrziel vorgeschlagen.

Die DE 10 2013 003 411 A1 beschreibt ein Verfahren zum Steuern und/oder Regeln des Energieverbrauchs und/oder der Fahrtroute eine Elektrofahrzeugs. Dabei werden eine Restenergiekenngröße in Abhängigkeit von einer gespeicherten Energie, eine Fahrtroute und eine zum Befahren der Fahrtroute benötigte Energiemenge ermittelt und ausgewertet.

Ferner beschreibt die DE 10 2012 023 632 A1 eine aktive Reichweitenbeeinflussung eines Fahrzeugs, wobei durch eine gekoppelte Betrachtung von Restreichweiten und dazu jeweils korrespondierenden Systemkonfigurationen die Wechselwirkung zwischen einer Systemkonfiguration und der sich daraus ergebenden Restreichweite für den Nutzer dargestellt wird.

Die DE 10 2014 215 181 A1 offenbart ein Verfahren und eine Vorrichtung zum Erhöhen der Reichweite eines Fahrzeugs mit einem elektrischen Antrieb. Dabei eine gewünschte Reichweite des Fahrzeugs und eine zulässige Maximalleistung ermittelt, die ein elektrischer Antrieb abgeben oder aus einem Akkumulator aufnehmen darf, damit die gewünschte Reichweite erreicht wird.

Des Weiteren beschriebt die DE 10 2015 001 248 A1 ein Verfahren zum Betreiben eines Kraftfahrzeugs. Hierbei wird ein eingegebenes Ziel erfasst und eine am Ziel aufweisende Restreichweite des Kraftfahrzeugs ermittelt. Falls die ermittelte Restreichweite geringer als ein vorgegebener Schwellenwert, dann wird das Kraftfahrzeug in einem Verbrauchsoptimierungsmodus betrieben.

Die EP 0 903 712 A2 beschreibt eine Anzeigevorrichtung für Fahrzeuge zur Anzeige der Reichweite in Abhängigkeit von der vorhandenen Energiemenge und von verbrauchsbeeinflussenden Parametern im Fahrzeug.

Die DE 10 2012 003 292 A1 beschreibt, dass zum Prognostizieren eines Energieverbrauchs entlang einer geplanten Fahrstrecke auf Historiendaten zurückgegriffen werden kann, die ein Fahrverhalten des aktuellen Fahrers beschreiben.

Die DE 10 2015 202 845 A1 offenbart ein beispielhaftes Verfahren zum Steuern eines Elektrofahrzeugs umfassend ein Ändern des Betriebs eines Elektrofahrzeugs als Antwort auf einen vorhergesagten Energieverbrauchswert.

Der Erfindung liegt die Aufgabe zugrunde, bei einem elektrisch angetriebenen Kraftfahrzeug eine unnötige Leistungsbeschränkung von Fahrzeugkomponenten aufgrund eines geringen Ladezustands eines Energiespeichers zu vermeiden.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Die Erfindung stellt ein Verfahren bereit, das in einem Kraftfahrzeug, insbesondere einem rein-elektrisch oder hybrid angetriebenen Kraftfahrzeug, durch eine Steuervorrichtung ausgeführt werden kann. Die Steuervorrichtung kann beispielsweise ein Steuergerät des Kraftfahrzeugs oder eine Anordnung aus mehreren Steuergeräten sein.

Durch das Verfahren wird ein Ladeort geschätzt, an welchem voraussichtlich das nächste Mal ein Energiespeicher des Kraftfahrzeugs aufgeladen wird. Bei dem Energiespeicher handelt es sich um denjenigen, mittels welchem auch der Antriebsmotor für den Fahrbetrieb versorgt wird. Im Falle eines elektrischen Antriebsmotors kann der Energiespeicher eine Batterie sein. In Abhängigkeit von dem aktuellen Ladezustand (SOC - State of Charge) dieses Energiespeichers wird die Restreichweite des Kraftfahrzeugs geschätzt. Es handelt sich hierbei um diejenige Fahrstrecke, die noch zurückgelegt werden kann, bis eine vorbestimmte vorgehaltene Reserveenergiemenge oder ein vorbestimmter Restladezustand des Energiespeichers erreicht ist. Es muss sich also nicht um eine vollständige Restentladung handeln, sondern es geht um einen vorbestimmten Ladezustandswert. Hierbei wird das aktuelle Betriebsprofil des Kraftfahrzeugs oder ein voraussichtliches Betriebsprofil des Kraftfahrzeugs zugrunde gelegt. Jedes Betriebsprofil beschreibt den voraussichtlichen Leistungsverbrauch oder Energieverbrauch des Kraftfahrzeugs während der weiteren Fahrt zum Ladeort. Somit hat dieser Leistungsbedarf Einfluss auf die berechnete oder ermittelte Restreichweite. Es kann anhand des zugrunde gelegten Betriebsprofils überprüft werden, ob die Restreichweite zum Anfahren des ermittelten Ladeorts ausreicht. Es wird also erkannt, ob beim Anfahren des Ladeorts oder beim Hinfahren zu dem Ladeort noch so viel Energie in dem Energiespeicher gespeichert ist, dass zumindest der Restladezustand erhalten oder übrig bleibt.

Für den Fall, dass die Restreichweite kleiner als die Fahrstrecke bis zum Ladeort ist, wird die elektrische Leistung reduziert, die eigentlich gemäß dem zugrunde gelegten Betriebsprofil während der weiteren Fahrt zumindest einer elektrisch betriebenen Fahrzeugkomponente bereitgestellt oder zugeführt werden müsste. Durch Reduzieren der bereitgestellten elektrischen Leistung, also durch Abweichen von dem ermittelten oder zugrunde gelegten Betriebsprofil, kann die Restreichweite erhöht werden.

Das Reduzieren der Leistung ist aber nicht beliebig, sondern es handelt sich um eine adaptive Leistungsreduzierung. Diese sieht vor, dass die insgesamt bewirkte Leistungsreduktion, die also für alle in Betracht gezogenen Fahrzeugkomponenten durchgeführt wird, nur so groß ist, dass bei Erreichen des Ladeorts der Restladezustand erreicht ist. Es wird also der Leistungsverbrauch nicht minimiert, sondern nur gerade so weit reduziert, dass der Ladeort erreicht werden kann unter der Bedingung, dass bei Erreichen des Ladeorts eben der vorgegebene Restladezustand vorhanden ist, also zum Beispiel noch ein Füllstand von 3% vorliegt. Der Restladezustand kann auch als eine noch verbleibende Fahrreichweite, z.B. 5 km, definiert sein.

Durch die Erfindung ergibt sich der Vorteil, dass erkannt werden kann, welche Leistungsreduktion überhaupt nur nötig ist, und dann auch nur diese unbedingt nötige Leistungsreduktion tatsächlich in dem Kraftfahrzeug angewendet wird, um den nächsten geplanten Ladeort erreichen zu können. Es wird also hierbei alle verfügbare Energie aus dem Energiespeicher bis hin zum Restladezustand genutzt.

Um extremen Situationen zuvorzukommen, ist erfindungsgemäß die Überwachung des Leistungsverbrauchs vorgesehen, um eine Ausnahmesituation zu erkennen. Diese wird anhand des aktuellen Betriebsprofils erkannt. Eine Ausnahmesituation ist dabei gegeben, falls ein aktueller Leistungsverbrauch des Kraftfahrzeugs größer als ein Erwartungswert ist. Der Erwartungswert ist ein statistischer Mittelwert, der über eine vorbestimmte Anzahl von Fahrten des Kraftfahrzeugs und/oder einen vorbestimmten Zeitraum ermittelt wurde. Erfindungsgemäß ist die Ausnahmesituation dadurch definiert, dass ein bestimmtes Vielfaches des Erwartungswerts, beispielsweise das Anderthalbfache oder das Doppelte des Erwartungswerts vorliegt. Falls die Ausnahmesituation vorliegt, wird unabhängig von der Restreichweite unmittelbar, d.h. sofort die Leistungsreduktion aktiviert oder einem Benutzer zumindest zur Aktivierung angeboten. Hierdurch wird vermieden, dass es im restlichen Verlauf der Fahrt zu einer Extremsituation in Bezug auf die elektrische Versorgung des Kraftfahrzeugs kommt.

Zu der Erfindung gehören auch optionale Weiterbildungen, durch deren Merkmale sich zusätzliche Vorteile ergeben.

Falls die Restreichweite zum Anfahren des Ladeorts noch ausreicht, kann jede Fahrzeugkomponente gemäß dem zugrunde gelegten Betriebsprofil oder allgemein gemäß der von ihr jeweils angeforderten Leistung uneingeschränkt weiter betrieben werden.

Zum Schätzen der Restreichweite sollte beachtet werden, dass ein Kraftfahrzeug mit elektrischem Antriebsmotor z.B. aufgrund des Gewichts des Energiespeichers bei einer Bergauffahrt mehr Antriebsleistung benötigt. Somit ist also nicht nur das Betriebsprofil ausschlaggebend, sondern bevorzugt wird zum Schätzen der Restreichweite auch die Antriebsleistung zum Überwinden einer Straßensteigung eines Straßennetzes anhand von Topographiedaten berechnet. Auch das Einsparen von Leistung aufgrund eines Segelbetriebs (antriebsloses Rollen) kann berücksichtigt werden.

Falls nicht einfach das aktuelle Betriebsprofil extrapoliert oder verwendet wird, sondern ein voraussichtliches Betriebsprofil geschätzt wird, das den voraussichtlichen Leistungsbedarf der zumindest einen Fahrzeugkomponente angibt, so ist hier bevorzugt vorgesehen, anhand von Wetterdaten die zukünftig benötigte oder angeforderte Klimatisierungsleistung zu schätzen. Hierdurch kann der Leistungsbedarf einer Klimaanlage des Kraftfahrzeugs geschätzt werden, der in Bezug auf eine Reichweitenberechnung einen hohen Einfluss haben kann. Zusätzlich oder alternativ kann anhand eines Nutzerprofils zumindest eines Nutzers des Kraftfahrzeugs ein voraussichtlicher zusätzlicher oder wegfallender Leistungsbedarf ermittelt werden, wie er beispielsweise durch Benutzung eines Video-Abspielgeräts und/oder einer Klimaanlage und/oder aufgrund einer Fahrweise des Nutzers abgeschätzt oder prädiziert werden kann.

Durch Schätzen der Klimatisierungsleistung und/oder der Fahrleistung sind zwei Fahrzeugkomponenten überwacht, die auf die Restreichweite einen signifikanten Einfluss haben. Entsprechend ist vorgesehen, zum Sicherstellen einer ausreichenden Restreichweite bis hin zum Ladeort die Leistungsreduktion beim elektrischen Antriebsmotor und/oder einer Klimaanlage des Kraftfahrzeugs durchzuführen. Die elektrische Leistung des Antriebsmotors und/oder der Klimaanlage zu reduzieren, erhöht die Restreichweite.

Der beschriebene Ladeort kann beispielsweise eine Ladestation sein, die an einem öffentlich zugänglichen Bereich angeordnet ist oder auch an einem Privatparkplatz, wo sie der Nutzer des Kraftfahrzeugs installiert haben kann. Um zu ermitteln, wo sich der nächste, voraussichtlich angefahrene oder angesteuerte Ladeort befindet, können Fahrzieldaten eines Navigationsgeräts des Kraftfahrzeugs zugrunde gelegt werden. Zusätzlich oder alternativ dazu kann für den Fall, dass Fahrzieldaten nicht vorhanden sind, weil der Fahrer beispielsweise ohne Navigationsassistenz fährt, auch vorgesehen sein, eine Prädiktive Fahrzielschätzung zu betreiben und mittels dieser Prädiktionsdaten für ein Fahrziel zu erhalten. Eine prädiktive Fahrzielschätzung nutzt beispielsweise eine Übereinstimmung der aktuellen Fahrroute mit bereits in der Vergangenheit in zurückgelegten, historischen Fahrrouten, um hierdurch aus den historischen Fahrrouten das Fahrziel abzuschätzen. Zusätzlich oder alternativ dazu kann eine fahrzeugexterne Datenbank für Ladestellen zugrunde gelegt werden, um Ladeorte zu ermitteln. Somit steht das Wissen über den nächsten geplanten oder üblichen oder allgemein erreichbaren Ladestopp oder Ladeort bereit.

Falls die Schätzung des Ladeorts falsch ist, kann sich hierdurch auch eine Fehleinschätzung in Bezug auf die Restreichweite ergeben. Um dies zu vermeiden, ist bevorzugt vorgesehen, dass ein Hinweis in dem Kraftfahrzeug ausgegeben wird, welcher das Ergebnis der Schätzung, also den geschätzten Ladeort, angibt, damit der Fahrer den geschätzten Ladeort verifiziert oder bestätigt. Durch Betätigen einer Bedieneinrichtung wird ein Verifikationssignal erzeugt, das heißt die Steuervorrichtung empfängt dieses Verifikationssignal vom Fahrer über die Bedieneinrichtung. Beispielsweise kann auf einem Bildschirm der Bedieneinrichtung der geschätzte Ladeort angezeigt werden, woraufhin ein Nutzer beispielsweise einen Taster oder eine Schaltfläche zum Bestätigen oder aber auch zum Korrigieren betätigen kann.

Nicht immer ist es wünschenswert, die Leistung zumindest einer Fahrzeugkomponente zu reduzieren. Alternativ dazu kann versucht werden, das aktuelle Betriebsprofil oder das voraussichtliche Betriebsprofil beizubehalten. Falls hierbei die Restreichweite kleiner als die benötigte Fahrstrecke zum geschätzten Ladeort ist, kann deshalb eine mit dem zugrunde gelegten Betriebsprofil erreichbare, alternative Ladestation ermittelt werden, also ein alternativer Ladeort, und ein Hinweis auf die ermittelte alternative Ladestation ausgegeben werden.

Somit kann der Fahrer entscheiden, ob er die Leistungsreduktion durchführen lassen möchte oder lieber ohne Leistungsreduktion zur alternativen Ladestation fahren möchte.

Falls die Leistungsreduktion durchgeführt wird, so wird hierbei dem Fahrer zusätzlich bevorzugt auch ein informativer Hinweis ausgegeben. Hierdurch wird die Leistungsreduktion durch den Fahrer nicht als Fehlfunktion der gedrosselten Fahrzeugkomponente fehlinterpretiert.

Falls die Leistungsreduktion durchgeführt werden soll, muss entschieden werden, welche Fahrzeugkomponente oder welche mehreren Fahrzeugkomponenten davon betroffen sein sollen. Zum Auswählen der Fahrzeugkomponente, deren Leistung zu reduzieren ist, kann in dem Kraftfahrzeug eine Handlungsempfehlung zum Reduzieren des Verbrauchs zumindest einer Fahrzeugkomponente an den Fahrer ausgegeben. Der Fahrer erhält also eine Handlungsempfehlung, sodass er selbst die Auswahl der in der Leistung zu reduzierenden oder zu drosselnden Fahrzeugkomponente treffen kann. Somit reduziert der Benutzer den Verbrauch zumindest einer Fahrzeugkomponente selbstbestimmt.

Wie bereits ausgeführt, wird durch das Verfahren sichergestellt, dass der voraussichtliche nächste Ladeort mit einem Ladezustand des Energiespeichers erreicht wird, der hier als Restladezustand bezeichnet ist. Fraglich ist hierbei, wie sicher der Fahrer hierbei gehen möchte, das heißt wie groß der Restladezustand sein soll. Bevorzugt ist hier vorgesehen, dass der Ladezustandswert des Restladezustands vom Benutzer selbst eingegeben werden kann. Der Ladezustandswert wird also in Abhängigkeit von einer Benutzereingabe festgelegt oder eingestellt. Somit kann der Benutzer selbst festlegen, wie weit der Energiespeicher entladen werden soll, falls mittels der Leistungsreduktion das Kraftfahrzeug gesteuert oder gedrosselt wird.

Um das erfindungsgemäße Verfahren in einem Kraftfahrzeug durchführen zu können, ist durch die Erfindung die besagte Steuervorrichtung bereitgestellt. Diese weist eine Recheneinrichtung auf, die dazu eingerichtet ist, eine Ausführungsform des erfindungsgemäßen Verfahrens durchzuführen. Die Recheneinrichtung kann hierzu einen Mikroprozessor oder einen Mikrocontroller aufweisen.

Zu der Erfindung gehört schließlich auch das beschriebene elektrische Kraftfahrzeug, welches einen elektrischen Antriebsmotor für den Fahrantrieb, den beschriebenen Energiespeicher und eine Ausführungsform der erfindungsgemäßen Steuervorrichtung aufweist. Bei dem Energiespeicher kann es sich beispielsweise um eine Batterie, d.h. eine Traktionsbatterie, handeln.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: eine schematische Darstellung eines informativen Hinweises zu einer Leistungsreduktion, wie er in dem Kraftfahrzeug von Fig. 1 angezeigt werden kann; und
- Fig. 3: eine schematische Darstellung einer Ausgabe zum Anzeigen eines geschätzten Ladeorts für eine Verifikation durch einen Benutzer.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

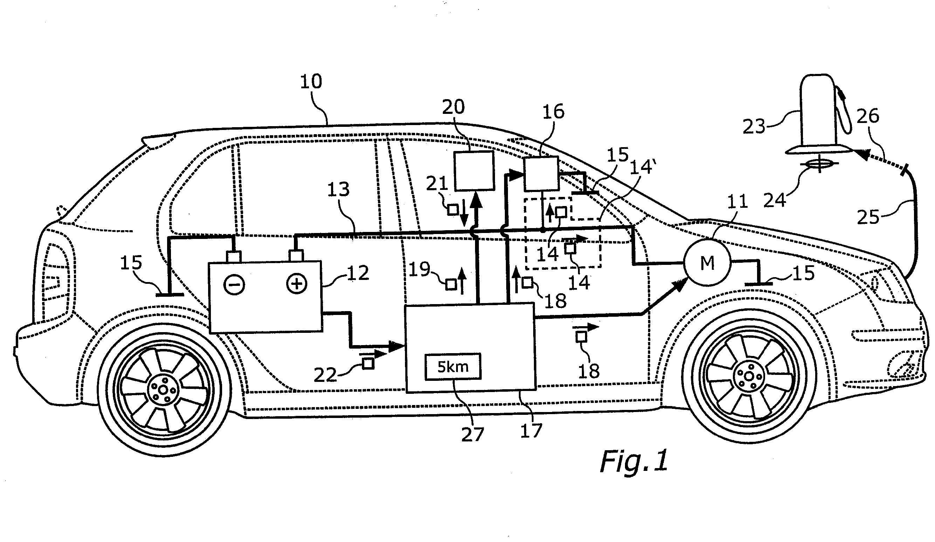

Fig. 1 zeigt ein Kraftfahrzeug 10, bei dem es sich zum Beispiel um einen Kraftwagen, insbesondere einen Personenkraftwagen oder Lastkraftwagen, handeln kann. Das Kraftfahrzeug 10 kann als rein-elektrisch angetriebenes Kraftfahrzeug oder als Hybridfahrzeug ausgestaltet sein. Als Fahrantrieb kann das Kraftfahrzeug entsprechend mindestens eine elektrische Maschine 11 aufweisen. Zum Versorgen der elektrischen Maschine 11 kann ein Energiespeicher 12 bereitgestellt sein, der beispielsweise eine Traktionsbatterie sein kann. Die elektrische Maschine 11 kann mit dem Energiespeicher 12 über ein elektrisches Bordnetz 13 verbunden sein, um elektrische Leistung 14 aus dem Energiespeicher 12 zu empfangen. Das Bordnetz 13 kann zum Beispiel ein Hochvolt-Bordnetz sein, d.h. es kann eine elektrische Spannung größer als 60 V bereitstellen. Zum Schließen eines Stromkreises kann das Bordnetz 13 über eine Rückleitung 15 verfügen, die hier nur angedeutet ist.

Des Weiteren kann eine Klimaanlage 16 bereitgestellt sein, die ebenfalls elektrische Leistung 14 aus dem Bordnetz 13 empfangen kann. Beispielsweise kann ein Kompressor der Klimaanlage 16 mit der elektrischen Leistung 14 betrieben werden. Die elektrische Maschine 11 und die Klimaanlage 16 repräsentieren zwei elektrisch betriebene Fahrzeugkomponenten des Kraftfahrzeugs 16. Es können weitere Fahrzeugkomponenten vorhanden sein. Alle aktuell verbrauchten oder benötigten Leistungswerte der Leistungen 14 stellen zusammen ein aktuelles Betriebsprofil 14' des Kraftfahrzeugs 10 dar.

Eine Steuervorrichtung 17 kann dazu ausgestaltet sein, die Menge der Leistung 14 bei der elektrischen Maschine 11 und/oder der Klimaanlage 16 durch ein jeweiliges Drosselsignal 18 dahingehend zu reduzieren, dass die jeweilige Fahrzeugkomponente weniger elektrische Leistung 14 aufnimmt oder verbraucht, als beispielsweise durch eine Einstellung vorgegeben ist, die der Benutzer getätigt haben kann. Bei der elektrischen Maschine 11 kann durch das Drosselsignal 18 also beispielsweise ein Beschleunigungsvermögen oder ein Drehmoment reduziert werden. Bei der Klimaanlage 16 kann durch das Drosselsignal 18 beispielsweise eine Kühlleistung oder eine Heizleistung reduziert werden.

Die Steuervorrichtung 17 kann ein Hinweissignal 19 über eine Bedienvorrichtung 20 ausgeben, um den Benutzer beispielsweise über ein ausgegebenes Drosselsignal 18 zu informieren. Die Bedienvorrichtung 20 kann beispielsweise durch ein Infotainmentsystem (Information-Unterhaltungssystem) des Kraftfahrzeugs 10 bereitgestellt sein. Die Bedienvorrichtung 20 kann auch eine Benutzereingabe 21 empfangen und der Steuervorrichtung 17 bereitstellen ("No, thanks" - Nein, danke; "Find Charger" - Finde eine andere Ladestation).

Das jeweilige Drosselsignal 18 für jede Fahrzeugkomponente 11, 16 kann durch die Steuervorrichtung 17 in Abhängigkeit von einem aktuellen Füllstand oder Ladezustand 22 des Energiespeichers 12 erzeugt werden. Den aktuellen Ladezustand 22 kann die Steuervorrichtung 17 in an sich bekannter Weise ermitteln, beispielsweise über einen Kommunikationsbus des Kraftfahrzeugs 10, wie zum Beispiel einen CAN-Bus (Controller Area Network). Des Weiteren kann durch die Steuervorrichtung berücksichtigt werden, in welcher Entfernung sich eine voraussichtlich für den nächsten Ladevorgang angesteuerte oder anvisierte Ladestation 23 befindet. Es wird hierzu der Ladeort 24, an welchem sich die Ladestation 23 befindet, ermittelt und überprüft, ob mit dem aktuellen Ladezustand 22 eine Restreichweite 25 bis zum Ladeort 24 gereicht. Ist dies nicht der Fall, so fehlt also eine zu überbrückende Reststrecke 26. Die Steuervorrichtung 17 kann hier vorsehen, dass die Restreichweite 25 nicht bis zur vollständigen Entladung des Energiespeichers 12 berechnet wird, sondern eine Reichweite bis zum Erreichen einer vorbestimmten Restladezustand 27 darstellt. Als Restladezustand 27 kann beispielsweise vorgegeben sein, dass noch derart viel Energie im Energiespeicher 12 vorhanden sein muss, dass noch eine Fahrt z.B. von 5 km möglich ist.

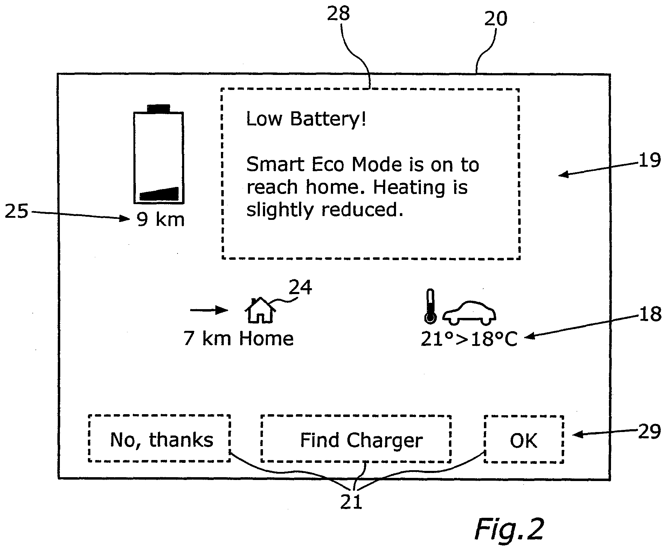

Fig. 2 zeigt beispielhaft einen Hinweis, der in dem Hinweissignal 19 enthalten sein kann, das über die Bedieneinrichtung 20 durch die Steuervorrichtung 17 ausgegeben werden kann. Angenommen sei hierbei, dass die Restreichweite 25 in dem Beispiel 9 km betrage und der Ladeort 24 in einer Entfernung von 7 km liege, was durch die Steuervorrichtung 17 einerseits anhand des aktuellen Betriebsprofils 14' für die Restreichweite 25 und andererseits anhand eines Verlaufs der aktuellen Fahrstrecke für das Schätzen des vom Fahrer geplanten Ladeorts 24 beispielsweise automatisiert erkannt worden sein kann.

Um den geschätzten Ladeort 24 zu erreichen (Entfernung 7 km) ist zumindest ein Drosselsignal 18 nötig, da in dem Beispiel ein Restladezustand von 5 km gefordert ist, während mit dem aktuellen Betriebsprofil 14' nur 9km - 7km = 2km Restenergie im Energiespeicher 12 übrig bleiben würden. Als Beispiel kann bei der Klimaanlage 16 die vom Benutzer eingestellte Solltemperatur (21 °C) auf 18 °C (in dem Beispiel angenommen) reduziert werden. Des Weiteren kann dem Benutzer ein Hinweis 28 ausgegeben werden, welcher auf die aktuelle Situation des Energiespeichers 12 und die Leistungsreduktion hinweisen kann ("Low Battery! Smart Eco Mode is on to reach home. Heating is slightly reduced."- Geringer Batterieladestand! Adaptiver Sparmodus ist aktiviert, um die Heimstation zu erreichen. Heizung leicht gedrosselt.).

Das Drosselsignal 18 kann dabei in der Weise ausgestaltet sein, dass mittels der bewirkten Leistungsreduktion bei Erreichen des Ladeorts 24 der Ladezustand 22 auf den vorgegebenen Restladezustand 27 gesunken ist. Ein Ladezustandswert des Restladezustands 27 kann vom Benutzer vorgegeben werden, wodurch auf sein Sicherheitsbedürfnis reagiert werden kann.

Über Bedienfelder 29 kann der Benutzer eine Benutzereingabe 21 erzeugen, um hierdurch das Erzeugen des Drosselsignals 18 zu bestätigen, es abzulehnen oder alternativ dazu die aktuelle Fahrt umzuplanen und eine andere Ladestation suchen zu lassen.

Die in Fig. 2 dargestellte Maßnahme ist möglich, da die Steuervorrichtung 17 die Restreichweite 25 ermitteln kann, also den voraussichtlich nächsten Ladeort 24 sicher kennt.

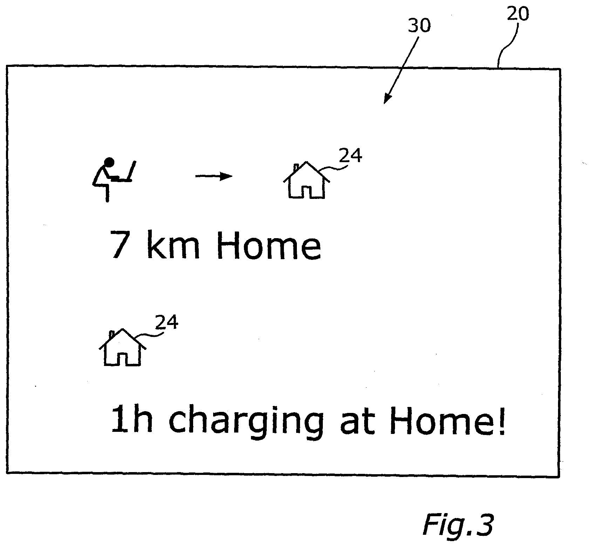

Fig. 3 veranschaulicht hierzu, wie dem Benutzer ein Hinweis 30 auf den geschätzten Ladeort 24 angezeigt werden ("7km Home" - Heimstation in 7km) kann und der Benutzer darüber informiert werden kann, dass dies die Grundlage für die Berechnung der Restreichweite 25 ist ("1h charging at Home" - 1h Laden an der Heimstation). Der Benutzer kann dann als Bedieneingabe 21 mittels der Bedieneinrichtung 20 ein Verifikationssignal erzeugen, das die Richtigkeit der Schätzung bestätigt.

Die Funktion der Steuervorrichtung 17 ersetzt eine feste Leistungsreduzierungen bei niedrigem SOC durch um eine adaptive Leistungsreduzierung in Abhängigkeit zum nächsten geplanten oder üblichen Ladestopp oder Ladeort 24. Ebenso werden feste Batteriewarnungen wie "Batteriestand niedrig" um informative Hinweise 28 und sinnvolle Handlungsempfehlungen für den Fahrer ersetzt.

Basis hierfür ist eine präzise Berechnung der Restreichweite 25 sowie das "Wissen" des Fahrzeuges über den nächsten geplanten oder erreichbaren Ladestopp. Dieser kann z.B. der Ort "Zuhause" (Home) sein. Eine Lademöglichkeit des Zielorts des Navigationssystems kann ebenfalls vorgesehen sein. Die Anfahrt kann auch bei deaktivierter Zielführung bei prädiktiver Navigation im Hintergrund erkannt werden.

Als Datenquellen können Funktionen, wie die lernende prädiktive Navigation (PNAV), ein interner Datenspeicher über genutzte Ladeorte (z.B. "Zuhause", "bei Freunden"), Daten des Navigationssystems sowie externe Datenbanken mit Ladestellen verwendet werden. Ebenso können Kartenmaterial mit Topologieinformationen und/oder externe Daten über das Wetter genutzt werden.

Die Auswertung dieser Daten ermöglicht es der Steuervorrichtung 17, die Leistungen 14 beispielsweise des Motors 11 und der Heizung 16 adaptiv nur soweit wie nötig zu reduzieren, um das Ziel noch sicher zu erreichen.

Fig. 2 veranschaulicht hierzu das Beispiel folgender Situation: 5% SOC, Batteriewarnung, Restreichweite 9 km. Entfernung zum Ladestopp: 7 km. Üblicherweise wird in solchen Situationen die Leistung 14 reduziert und Nebenverbraucher 16 werden ganz abgeschaltet. Da das Ziel aber noch erreicht werden kann, ist dies nicht nötig. Zur Sicherheit können aber Nebenverbraucher bei nur minimalen Komforteinbußen automatisch oder auf Wunsch des Fahrers reduziert werden, um den vorgegebenen Restladezustand 27 zu erhalten. Ebenso bekommt der Fahrer einen Hinweis 30, das geschätzte Ziel noch sicher mit dem entsprechenden Puffer erreichen zu können, dort aber nachladen zu müssen.

Bevorzugt erfolgt die Auswertung aller internen und externen Datenquellen, um den Zielort des Fahrers, d.h. den geplanten Ladestopp zu erkennen (auch bei deaktivierter Zielführung) sowie Berechnung des erreichbaren Ladestopps. Es geht eine Information an den Fahrer über den erkannten Zielort (auch bei deaktivierter Zielführung) und vom System/Fahrer eingeplanten Ladestopp (siehe Fig. 3). Die Reduzierung der Leistung des Motors und Nebenverbraucher ist nur adaptiv und nur falls benötigt, um einen Reservepuffer vorzuhalten. Die Information an den Fahrer, dass der Zielort auch bei niedrigem SOC noch sicher erreicht werden kann, führt zu einer Reduzierung der sogenannten Reichweitenangst. Zudem ist eine Empfehlung einer Lademöglichkeit in der Nähe. Die Information/Nachfrage an den Fahrer klärt darüber auf, dass Reduzierung der Leistung des Motors und Nebenverbraucher adaptiv erfolgt, um den Reichweitenpuffer zu erhöhen bzw. den Stromverbrauch zu reduzieren, um eingeplanten Ladestopp sicher zu erreichen. Abhängig von der Entfernung zu dem geplanten Ladestopp wird bei einem höher als erwartetem Energieverbrauch in Ausnahmesituationen bevorzugt auch vor einem niedrigen SOC eine adaptive Leistungsreduzierung angeboten/bei dem Fahrer angefragt, um Ziel sicher erreichen zu können. Der Fahrer kann die vorgehaltene Reserveenergiemenge (Restladezustand 27) als größeren Puffer konfigurieren und damit die Sicherheit erhöhen. Dies berücksichtigt die Berechnung der Ladestopps/Zielführung. Der Puffer wird dem Fahrer angezeigt und erhöht so das Systemvertrauen, insbesondere bei späteren Hinweisen zur Leistungsreduzierung.

Die Steuervorrichtung 17 ist einsetzbar bei allen Fahrzeugen, insbesondere Batterieelektrische- oder Hybrid-Fahrzeugen, bei denen die Reduzierung von Motorleistung und Nebenverbrauchern die Reichweite erhöht

Auch bei allen Maschinen, Luft-, oder Wasserfahrzeugen, bei denen die Reduzierung von Motorleistung und Nebenverbrauchern die Restlaufdauer bzw. Reichweite erhöht. Der Energiespeicher kann auch ein Kraftstofftank sein.

Insgesamt zeigt das Beispiel, wie durch die Erfindung ein adaptiver Energiesparmodus bereitgestellt werden kann.

## Patentansprüche

1. Verfahren zum Betreiben einer Steuervorrichtung (17) eines Kraftfahrzeugs (10), wobei während einer Fahrt des Kraftfahrzeugs (10)
- ein Ladeort (24) geschätzt wird, an welchem voraussichtlich das nächste Mal ein Energiespeicher (12) des Kraftfahrzeugs (10) aufgeladen wird, und
- in Abhängigkeit von einem aktuellen Ladezustand (22) des Energiespeichers (12) eine Restreichweite (25) des Kraftfahrzeugs (10) geschätzt wird, die bei einem aktuellen und/oder voraussichtlichen Betriebsprofil (14') des Kraftfahrzeugs (10) zurückzulegen noch möglich ist, bis ein vorbestimmter Restladezustand (27) des Energiespeichers (12) erreicht ist,
- überprüft wird, ob die Restreichweite (25) zum Anfahren des Ladeorts (24) ausreicht, und
- für den Fall, dass die Restreichweite (25) kleiner als eine Fahrstrecke bis zum Ladeort (24) ist, eine jeweilige elektrische Leistung (14), die bei dem zugrunde gelegten Betriebsprofil (14') zumindest einer elektrisch betriebenen Fahrzeugkomponente (11, 16) zugeführt wird, jeweils reduziert wird, wobei die hierdurch insgesamt bewirkte Leistungsreduktion nur so groß ist, dass bei Erreichen des Ladeorts (24) der Restladezustand (27) erreicht ist,
**dadurch gekennzeichnet, dass**
anhand des aktuellen Betriebsprofils (14') eine Ausnahmesituation erkannt wird, in welcher ein aktueller Leistungsverbrauch des Kraftfahrzeugs (10) größer als ein Erwartungswert ist, und unabhängig von der Restreichweite (25) sofort die Leistungsreduktion aktiviert oder zur Aktivierung einem Nutzer angeboten wird,
wobei die Ausnahmesituation gegeben ist, falls ein aktueller Leistungsverbrauch des Kraftfahrzeugs größer als ein Erwartungswert ist, wobei der Erwartungswert ein statistischer Mittelwert ist, der über eine vorbestimmte Anzahl von Fahrten des Kraftfahrzeugs und/oder einen vorbestimmten Zeitraum ermittelt wurde, und die Ausnahmesituation dadurch definiert ist, dass ein bestimmtes Vielfaches des Erwartungswerts vorliegt.

2. Verfahren nach Anspruch 1, wobei für den Fall, dass die Restreichweite (25) zum Anfahren des Ladeorts (24) ausreicht, jede Fahrzeugkomponente (11, 16) gemäß der von ihr jeweils angeforderten Leistung (14) uneingeschränkt weiter betrieben wird.

3. Verfahren nach einem der vorhergehenden Ansprüche, wobei zum Schätzen der Restreichweite (25) anhand von Topographiedaten eine Antriebsleistung zum Überwinden einer Straßensteigung eines Straßennetzes berechnet wird.

4. Verfahren nach einem der vorhergehenden Ansprüche, wobei zum Ermitteln des voraussichtlichen Betriebsprofils anhand von Wetterdaten eine Klimatisierungsleistung und/oder anhand eine Nutzerprofils zumindest eines Nutzers des Kraftfahrzeugs (10) ein voraussichtlicher zusätzlicher oder wegfallender Leistungsbedarfs geschätzt wird.

5. Verfahren nach einem der vorhergehenden Ansprüche, wobei die Leistungsreduktion für einen elektrischen Antriebsmotor (11) und/oder eine Klimaanlage (16) des Kraftfahrzeugs (10) durchgeführt wird.

6. Verfahren nach einem der vorhergehenden Ansprüche, wobei der nächste Ladeort (24) auf der Grundlage von Fahrzieldaten eines Navigationsgeräts und/oder Prädiktionsdaten einer prädiktiven Fahrzielschätzung und/oder einer fahrzeugexternen Datenbank für Ladestellen ermittelt wird.

7. Verfahren nach einem der vorhergehenden Ansprüche, wobei ein den geschätzten Ladeort (24) angebender Hinweis (30) in dem Kraftfahrzeug (10) zur Verifizierung durch den Fahrer ausgegeben wird und ein Verifikationssignal (21) über eine Bedieneinrichtung (20) empfangen wird.

8. Verfahren nach einem der vorhergehenden Ansprüche, wobei für den Fall, dass die Restreichweite (25) kleiner als eine Fahrstrecke zum Ladeort (24) ist, eine mit dem zugrunde gelegten Betriebsprofil (14') erreichbare alternative Ladestation ermittelt und ein Hinweis auf die ermittelte Ladestation ausgegeben wird.

9. Verfahren nach einem der vorhergehenden Ansprüche, wobei die Leistungsreduktion durch Ausgeben eines informativen Hinweises (28) dem Fahrer mitgeteilt wird.

10. Verfahren nach einem der vorhergehenden Ansprüche, wobei zum Auswählen der Fahrzeugkomponente (11, 16), deren Leistung (14) zu reduzieren ist, in dem Kraftfahrzeug (10) eine Handlungsempfehlung zum Reduzieren eines Verbrauchs zumindest einer Fahrzeugkomponente (11, 16) ausgegeben wird.

11. Verfahren nach einem der vorhergehenden Ansprüche, wobei ein Ladezustandswert, welcher den Restladezustand (27) definiert, in Abhängigkeit von einer Nutzereingabe festgelegt wird.

12. Steuervorrichtung (17) für ein Kraftfahrzeug (10), wobei die Steuervorrichtung (17) eine Recheneinrichtung aufweist, die dazu eingerichtet ist, ein Verfahren nach einem der vorhergehenden Ansprüche durchzuführen.

13. Kraftfahrzeug (10) mit einem elektrischen Antriebsmotor (11) für einen Fahrantrieb und mit einem Energiespeicher (12) für den Antriebsmotor (11) und mit einer Steuervorrichtung (17) nach Anspruch 12.

## Claims

1. Method for operating a control device (17) of a motor vehicle (10), wherein while the motor vehicle (10) is travelling
- a charging location (24) at which it is anticipated that an energy store (12) of the motor vehicle (10) will be charged the next time is estimated, and
- as a function of a current state of charge (22) of the energy store (12), a residual range (25) of the motor vehicle (10) is estimated which it is still possible to cover with a current and/or anticipated operating profile (14') of the motor vehicle (10) until a predetermined residual state of charge (27) of the energy store (12) is reached,
- it is checked whether the residual range (25) is sufficient to reach the charging location (24), and
- if the residual range (25) is shorter than a distance to the charging location (24), a respective quantity of electrical power (14), which is fed to at least one electrically powered vehicle component (11, 16) under the underlying operating profile (14'), is respectively reduced, wherein the overall power reduction which is brought about as a result is only of such a magnitude that the residual state of charge (27) is reached when the charging location (24) is reached,
**characterised in that**
based on the current operating profile (14'), an exceptional situation is detected in which a current power consumption of the motor vehicle (10) is greater than an expected value, and independently of the residual range (25), the power reduction is immediately activated or offered to a user for activation,
wherein the exceptional situation is present if a current power consumption of the motor vehicle is greater than an expected value, wherein the expected value is a statistical mean value determined over a predetermined number of journeys of the motor vehicle and/or a predetermined period, and the exceptional situation is defined by the presence of a specific multiple of the expected value.

2. Method according to claim 1, wherein if the residual range (25) is sufficient to reach the charging location (24), each vehicle component (11, 16) continues to be operated without restriction according to the power (14) requested by it.

3. Method according to any one of the preceding claims, wherein to estimate the residual range (25), a drive power for overcoming a road gradient of a road network is calculated based on topography data.

4. Method according to any one of the preceding claims, wherein to determine the anticipated operating profile, a climate control power is estimated based on weather data and/or an anticipated additional or reduced power requirement is estimated based on a user profile of at least one user of the motor vehicle (10).

5. Method according to any one of the preceding claims, wherein the power reduction is performed for an electric drive motor (11) and/or an air conditioning system (16) of the motor vehicle (10).

6. Method according to any one of the preceding claims, wherein the next charging location (24) is determined on the basis of destination data of a navigation device and/or prediction data of a predictive destination estimation and/or a vehicle-external database for charging stations.

7. Method according to any one of the preceding claims, wherein an indication (30) indicating the estimated charging location (24) is output in the motor vehicle (10) for verification by the driver, and a verification signal (21) is received via an operating apparatus (20).

8. Method according to any one of the preceding claims, wherein if the residual range (25) is shorter than a distance to the charging location (24), an alternative charging station that can be reached with the underlying operating profile (14') is determined and an indication of the determined charging station is output.

9. Method according to any one of the preceding claims, wherein the power reduction is communicated to the driver by outputting an informative indication (28).

10. Method according to any one of the preceding claims, wherein for selecting the vehicle component (11, 16) whose power (14) is to be reduced, an action recommendation for reducing consumption of at least one vehicle component (11, 16) is output in the motor vehicle (10).

11. Method according to any one of the preceding claims, wherein a state of charge value which defines the residual state of charge (27) is set as a function of a user input.

12. Control device (17) for a motor vehicle (10), wherein the control device (17) has a computing apparatus which is configured to perform a method according to any one of the preceding claims.

13. Motor vehicle (10) with an electric drive motor (11) for a traction drive and with an energy store (12) for the drive motor (11) and with a control device (17) according to claim 12.

## Revendications

1. Procédé de fonctionnement d'un dispositif de commande (17) d'un véhicule à moteur (10), dans lequel, pendant un déplacement du véhicule à moteur (10),
- un emplacement de charge (24) auquel un dispositif de stockage d'énergie (12) du véhicule à moteur (10) sera prévisionnellement chargé la prochaine fois est estimé, et
- en fonction d'un état de charge actuel (22) du dispositif de stockage d'énergie (12), une autonomie restante (25) du véhicule à moteur (10) qu'il est encore possible de couvrir avec un profil de fonctionnement actuel et/ou prévisionnel (14') du véhicule à moteur (10) est estimée, jusqu'à ce qu'un état de charge restante prédéterminé (27) du dispositif de stockage d'énergie (12) soit atteint,
- il est vérifié si l'autonomie restante (25) est suffisante pour atteindre l'emplacement de charge (24), et
- dans le cas où l'autonomie restante (25) est inférieure à une distance jusqu'à l'emplacement de charge (24), une puissance électrique respective (14), qui est amenée à au moins un composant de véhicule (11, 16) à fonctionnement électrique selon le profil de fonctionnement (14') servant de base, est respectivement réduite, dans lequel la réduction de puissance globale qui est ainsi provoquée est uniquement d'une telle grandeur que l'état de charge restante (27) soit atteint lorsque l'emplacement de charge (24) est atteint,
**caractérisé en ce que**
à l'aide du profil de fonctionnement actuel (14'), une situation exceptionnelle est reconnue, dans laquelle une consommation de puissance actuelle du véhicule à moteur (10) est supérieure à une valeur attendue, et indépendamment de l'autonomie restante (25), la réduction de puissance est immédiatement activée ou proposée pour activation à un utilisateur,
dans lequel la situation exceptionnelle est donnée si une consommation de puissance actuelle du véhicule à moteur est supérieure à une valeur attendue, dans lequel la valeur attendue est une valeur moyenne statistique qui a été déterminée sur un nombre prédéterminé de déplacements du véhicule à moteur et/ou sur une période prédéterminée, et la situation exceptionnelle est définie par la présence d'un multiple déterminé de la valeur attendue.

2. Procédé selon la revendication 1, dans lequel, dans le cas où l'autonomie restante (25) suffit pour atteindre l'emplacement de charge (24), chaque composant de véhicule (11, 16) continue à fonctionner sans restriction respectivement selon la puissance (14) qu'il requiert.

3. Procédé selon l'une quelconque des revendications précédentes, dans lequel, pour estimer l'autonomie restante (25), une puissance motrice pour franchir une pente de route d'un réseau routier est calculée à l'aide de données topographiques.

4. Procédé selon l'une quelconque des revendications précédentes, dans lequel, pour déterminer le profil de fonctionnement prévisionnel, une puissance de climatisation est estimée à l'aide de données météorologiques et/ou un besoin de puissance supplémentaire ou réduit prévisionnel est estimé à l'aide d'un profil d'utilisateur d'au moins un utilisateur du véhicule à moteur (10).

5. Procédé selon l'une des revendications précédentes, dans lequel la réduction de puissance est effectuée pour un moteur d'entraînement électrique (11) et/ou une climatisation (16) du véhicule à moteur (10).

6. Procédé selon l'une quelconque des revendications précédentes, dans lequel le prochain emplacement de charge (24) est déterminé sur la base de données de destination d'un appareil de navigation et/ou de données prédictives d'une estimation de destination prédictive et/ou d'une base de données externe au véhicule pour emplacements de charge.

7. Procédé selon l'une quelconque des revendications précédentes, dans lequel une indication (30) spécifiant l'emplacement de charge estimé (24) est émise dans le véhicule à moteur (10) pour vérification par le conducteur, et un signal de vérification (21) est reçu par l'intermédiaire d'un appareil de commande (20).

8. Procédé selon l'une quelconque des revendications précédentes, dans lequel, dans le cas où l'autonomie restante (25) est inférieure à une distance de déplacement jusqu'à l'emplacement de charge (24), une station de charge alternative pouvant être atteinte avec le profil de fonctionnement (14') servant de base est déterminée, et une indication de la station de charge déterminée est émise.

9. Procédé selon l'une quelconque des revendications précédentes, dans lequel la réduction de puissance est communiquée au conducteur par l'émission d'une indication informative (28).

10. Procédé selon l'une quelconque des revendications précédentes, dans lequel, pour sélectionner le composant de véhicule (11, 16) dont la puissance (14) doit être réduite, une recommandation d'action pour réduire une consommation d'au moins un composant de véhicule (11, 16) est émise dans le véhicule à moteur (10).

11. Procédé selon l'une quelconque des revendications précédentes, dans lequel une valeur d'état de charge, qui définit l'état de charge restante (27), est déterminée en fonction d'une entrée d'utilisateur.

12. Dispositif de commande (17) pour un véhicule à moteur (10), dans lequel le dispositif de commande (17) présente un appareil de calcul qui est configuré pour mettre en œuvre un procédé selon l'une quelconque des revendications précédentes.

13. Véhicule à moteur (10) avec un moteur d'entraînement électrique (11) pour un entraînement de déplacement et avec un dispositif de stockage d'énergie (12) pour le moteur d'entraînement (11) et avec un dispositif de commande (17) selon la revendication 12.
